# EUROPÄISCHE PATENTSCHRIFT

(11) **EP 1 137 607 B1**
(45) Veröffentlichungstag und Bekanntmachung des Hinweises auf die Patenterteilung: **16.07.2003**
(21) Anmeldenummer: 00929368.9
(22) Anmeldetag: 17.04.2000
(51) Int. Cl.: C03C 17/32, B32B 17/10

(54) **POLYMERBESCHICHTETE DÜNNGLASFOLIENSUBSTRATE**
POLYMER-COATED THIN GLASS FILM SUBSTRATES
SUBSTRATS EN MINCES FEUILLES DE VERRE REVETUES DE POLYMERE

(30) Priorität: 30.04.1999 EP 99108440
(43) Veröffentlichungstag der Anmeldung: 04.10.2001
(73) Patentinhaber: Schott Displayglas GmbH, 55122 Mainz (DE)
(72) Erfinder: BÜRKLE, Roland, D-55268 Nieder-Olm (DE); DEUTSCHBEIN, Silke, D-55118 Mainz (DE); MAUCH, Reiner, D-55218 Ingelheim (DE); SOSSENHEIMER, Karl-Heinz, D-55263 Wackernheim (DE); WEBER, Andreas, D-55124 Mainz (DE)
(74) Vertreter: Dr. Weitzel & Partner
(86) Internationale Anmeldenummer: EP0003471
(87) Internationale Veröffentlichungsnummer: WO00066507

(56) Entgegenhaltungen:
- EP-A- 0 272 875
- EP-A- 0 669 205
- EP-A- 0 759 565
- EP-A- 0 791 454
- EP-A- 0 838 723
- EP-A- 0 949 850
- EP-A- 1 048 628
- WO-A-00/41978
- WO-A-99/21707
- WO-A-99/21708
- GB-A- 1 319 846
- ANONYMOUS: "Image Processing Method" IBM TECHNICAL DISCLOSURE BULLETIN, Bd. 40, Nr. 1, 1. Januar 1997 (1997-01-01), Seiten 139-140, XP002146427 New York, US

## Beschreibung

Die Erfindung bezieht sich auf eine Glas-Kunststoff-Verbundfolie, insbesondere zur Verwendung in elektronischen Bauteilen und Geräten, beispielsweise Displays, aus einer Glasfolie, die eine Dicke zwischen 10 µm und 500 µm aufweist, und einer auf mindestens einer ihrer Seitenflächen aufgebrachten Polymerschicht, die eine Dicke zwischen 1 µm und 200 µm aufweist. Darüber hinaus bezieht sie sich auf Verfahren zur Herstellung dieser Glas-Kunststoff-Verbundfolie sowie deren Verwendung.

Flachglassubstrate eignen sich in vielen Anwendungen als geeignetes Substratmaterial, bei denen es auf Transparenz, hohe chemische und thermische Beständigkeit sowie definierte chemische und physikalische Eigenschaften ankommt. Dies sind insbesondere Anwendungsfelder, bei denen die Methoden der Dünnschicht- und Dickschichttechnik Verwendung finden, wie z.B. Displayanzeigen, Dünn- oder Dickschichtsensoren, Solarzellen, mikromechanische Bauelemente und lithographische Masken. Die Nachfrage nach neuen Produktfunktionalitäten und Anwendungsfeldem verlangt in jüngerer Zeit nach immer dünneren oder ultradünnen Substraten, die die bereits bekannten guten Eigenschaften von Glassubstraten besitzen, zum Teil aber auch neue Eigenschaften wie z.B. Biegsamkeit aufweisen. Typische Anwendungsfelder sind wiederum elektronische Anwendungen wie Sensoren oder Membranelemente.

Insbesondere bei Displays, z.B. Flüssigkristallanzeigen (Liquid Cristal Display LCD), geht der Trend zu immer ansprechenderen Designanforderungen und verlangt deshalb neue Funktionalitäten. Dies sind insbesondere ultradünne und besonders leichte Anzeigen für beispielsweise portable Taschengeräte, flexible Anzeigen für Geräte mit abgerundeter Gehäuseform wie Handys oder runde Stiftgeräte oder auch Displays für Smart-Cards oder Regalpreisschilder oder Anzeigen, die auf organischen oder anorganischen lichtemittierenden Schichten, sogenannten Light Emitting Organic Polymer Displays (OLED), beruhen.

Derartige Displays sind im allgemeinen folgendermaßen aufgebaut: Das Kemstück ist eine Zelle zur Aufnahme der Flüssigkristalle oder auch der Polymere, die mit einer Vorder- und Rückplatte versehen ist, auf die Elektroden aufgebracht sind. Bei den meisten Flüssigkristalldisplays schließen sich an die Vorder- und Rückwand der Zelle jeweils Polarisatoren an. Hinter dem rückwärtigen Polarisator ist bei reflektiven Displays eine Reflektorplatte angebracht. Im der Falle der emittierenden Polymere können die Gegenelektroden auch direkt auf den Polymer aufgedampft werden, bevor das Display mit der Rückplatte verschlossen wird. Damit die Anzeige möglichst gut funktioniert, muß gewährleistet werden, daß beispielsweise die Flüssigkristalle sich möglichst einheitlich ausrichten können und die Elektrodenpaare möglichst alle den gleichen Abstand zueinander aufweisen, da es sonst zu Verzerrungen oder örtlichen Intensitätsschwankungen des Angezeigten kommt. Ein Faktor der Einflußnahme ist die Oberflächengüte der zur Herstellung der einzelnen Komponenten benutzten Substrate.

Bevorzugte Substratmaterialien für die Herstellung der einzelnen Komponenten sind Glas und Kunststoff. Die besonderen Vorteile von Glas bestehen darin, daß es chemisch und auch photochemisch inert ist, optisch isotrop ist, temperaturbeständig ist, mechanisch stabil ist und außerdem eine harte Oberfläche besitzt. Allerdings hat es eine relativ hohe Dichte, ist spröde und daher sehr bruchempfindlich. Glasbruch während des Produktionsprozesses bringt nicht nur durch den hohen Ausschuß Verluste für den Produzenten, sondern auch durch die Tatsache, daß der Prozeß jedesmal unterbrochen werden muß, um die Maschinen von jeglichen Splittern zu reinigen.

Kunststoffe weisen eine geringere Dichte auf und sind elastisch und bruchfest, weisen aber auch diverse Nachteile auf: In den letzten Jahren wurden Substratmaterialien auf der Basis von hochwertigen Kunststoffolien für die Herstellung von Displays entwickelt und hergestellt als Ersatz für dünne Glassubstrate. Alle diese Folien benötigen aufwendige Spezialverfahren in der Herstellung zum Erreichen der benötigten Eigenschaften. Diese aufwendigen Herstellungsverfahren verteuern die Substrate erheblich. Außerdem hat sich gezeigt, daß trotz großer Entwicklungsanstrengungen die Wasser- und Dampfdurchlässigkeit solcher Substratfolien nicht ausreichend reduziert werden kann. Dies hat zur Folge, daß die Qualität und die Lebensdauer von aus solchen Substratfolien hergestellten LCD's sehr begrenzt sind. Bei den sogenannten OLED's führt der durch die Folie hindurchdiffundierende Sauerstoff zu einer Oxidation der organischen Halbleiterschichten und der aus unedlen Metallen bestehenden Elektroden und somit ebenfalls zu einer Herabsetzung der Lebensdauer der Anzeigen. Bei der Verwendung von Kunststoff als Displayschutzscheibe setzt die Kratzeranfälligkeit die Lebensdauer herab.

In Anlehnung an die Sicherheitsglasindustrie wird versucht, die günstigen Eigenschaften des Glases mit den guten Eigenschaften des Kunststoffes zu verbinden: In der DE-OS 36 15 277 A1 werden Glasscheiben mit Kunststoff als Splitterschutz durch Aufschmelzen beschichtet. In der DE-OS 31 27 721 A1 werden Kunststoffscheiben beschrieben, die als Kratzerschutz mit Glasfolien beschichtet werden, wobei das Beschichten unter Einwirkung von Druck und/oder Wärme geschieht, vorzugsweise aber unter Verwendung einer dazwischengelegten Schmelzklebefolie.

In Analogie dazu sind im Displaytechnikbereich mehrere Beispiele bekannt, die Eigenschaften von Glas und Kunststoff zu kombinieren. Ein Ansatz Glas mit einer Kunststoffschutzschicht zu versehen, ist aus der koreanischen Offenlegungsschrift KR-A 98-3695 bekannt. Das Glas wird höchstwahrscheinlich durch Ätzen auf die gewünschte Dicke gebracht und die Kunststoffschutzschicht soll nun die vom Ätzen verursachten Poren schließen sowie als Bruchschutz dienen. Die Bruchschutzfunktion besteht vor allem darin, daß die Propagation von bereits bestehenden Mikrorissen verhindert wird. Außer der Angabe, daß es sich um ein Harz aus der Gruppe der Duroplaste handelt, wird nicht näher auf die Auswahl des Polymers eingegangen. Auch wie die Schutzschicht aufgebracht wird, ist nicht näher offenbart. Geht man von den zum Zeitpunkt der Anmeldung dieser Schrift gängigen Glasdicken für die Verwendung in der Displayherstellung aus, die damals typischerweise zwischen 0,55 mm bis 1,1 mm lagen, und der geätzten Glasoberfläche, genügen die dort erzeugten Glas-Kunststoff-Verbundmaterialien den heutigen Anforderungen für Displayanwendungen nicht.

Bezüglich der Herstellung von Polarisatorfolien wird in der DE-OS 196 06 386 A1 eine gereckte, optische aktive Farbstoffolie aus Kunststoff beschrieben, die zur mechanischen Stabilisierung auf eine Glasfolie durch Pressen, Schmelzen, bevorzugt Kleben aufgebracht wird. Der Klebstoff dient dabei einer zusätzlichen mechanischen Stabilisierung der Farbstoffolie. Die Glasfoliendicken bewegen sich zwischen 10 und 200 µm, die Farbstoffoliendicken zwischen 5 und 60 µm.

Das Aufbringen der Farbstoffolie ist nicht unproblematisch: Beim Pressen ist der Ausschuß durch Glasbruch sehr hoch, das Schmelzen ist ein aufwendiger Vorgang, der die Eigenschaften der Farbstoffolien negativ beeinflussen kann, das Kleben ist mit den folgenden Nachteilen behaftet: Der Prozeß des Verklebens von Folien, hier einer Polymerfolie mit einer Glasfolie, wird auch Laminieren genannt. Das Laminieren geschieht im allgemeinen unter der Anwendung von Druck mittels Walzen. Dadurch kommt es zu einer erheblichen Belastung der Glasfolie, was insbesondere bei sehr dünnen Folien zum Bruch oder zur Schädigung, z.B. Kratzer an der Oberfläche, der Glasfolie führt. Es sind mindestens vier separate Herstellungsprozesse notwendig, die Dünnglasherstellung, die Folienherstellung, die Kleberbeschichtung und der eigentliche Laminiervorgang, was zu erheblichen Kosten führt. Außerdem sind hohe Ansprüche an die Klebe- und Laminiertechnik zu stellen, da das Produkt, insbesondere bei Displayanwendungen, keine Luft- und Staubpartikel enthalten darf. Bei der Auswahl der Kleber ist zu berücksichtigen, daß sie in der Regel eine nur begrenzte Temperatur- und Lösungsmittelbeständigkeit aufweisen. Eine homogene Dicke des Glaslaminates kann aufgrund von Dickenschwankungen in der duktilen Kleberschicht nicht im ausreichenden Maße garantiert werden.

Die Verwendung von Polymerfolien an sich ist problematisch, da sie im Laminat aufgrund ihres hohen Vernetzungsgrades bei Temperaturschwankungen erhebliche Druck- und Zugspannungen aufbauen. Die thermischen Ausdehnungskoeffizienten von Kunststoffen sind nämlich eine Größenordnung höher als die von Glas. Darüber hinaus weisen alle Polymerfolien nach Temperaturzyklen bis in die Nähe der Glasübergangstemperatur der Kunststoffe erheblichen irreversiblen Schrumpf auf, der bis zu 1 - 2 Größenordnungen größer als der von Glas sein kann, und der zu einem dauerhaften Verziehen der Laminate führt. Dieser Effekt ist häufig inhomogen und kann bei gereckten Folien anisotrop sein.

Weiterhin zeigen Polymerfolien in der Regel eine nicht unerhebliche optische Retardation (Doppelbrechung), die deutlich über 20 nm liegt. In Displays, die den Doppelbrechungseffekt von Flüssigkristallen ausnutzen, ist eine optische Anisotropie der Folie nicht zulässig. Die laterale Doppelbrechung Δn einer Folie ergibt sich aus der Differenz der Brechungsindizes parallel und senkrecht zu der Prozeßrichtung der Folien. Die optische Retardation γ einer Folie mit der Dicke d ergibt sich hieraus aus dem Produkt aus der Differenz der Brechungsindizes parallel und senkrecht zu der Prozeßrichtung der Folien und Foliendicke.

Für LCD-Anwendungen, die die Doppelbrechung des Flüssigkristalls ausnutzen, sind nur Substrate bzw. Substratfolien mit einer optischen Retardation <20 nm verwendbar. Die meisten kommerziell erhältlichen gezogenen Folien weisen aber ein Vielfaches dieses Wertes auf. Es sind nur wenige Folien erhältlich, die diesen Wert unterschreiten, welche aber aufgrund aufwendigerer Herstellungsverfahren sehr teuer sind.

Bei sehr dünnen Polymerfolien kommt hinzu, daß sie in einem Laminierprozeß nur sehr schwer zu handhaben sind und daher zu schlechten Ausbeuten führen. Sie sind nur schwer verzugsfrei zu laminieren, was zu zusätzlichen Spannungen und zum Verziehen des Laminates führen kann. Folienlaminate mit Polymerfoliendicke < 25 µm lassen sich großtechnisch und wirtschaftlich kaum noch herstellen.

in der japanischen Offenlegungsschrift JP-A 4-235527 wird ein Kunststoffsubstrat beschrieben, auf das eine Glasfolie aufgebracht wird, um die Oberflächengüte des Kunststoffsubstrates dahingehend zu verbessern, daß eine elektrisch leitende Schicht zum Anbringen von Elektroden darauf aufgebracht werden kann. Als Material für das Kunststoffsubstrat werden transparente Epoxyharze bevorzugt. Die Substratdicke kann 100 µm bis zu 10 mm betragen, je nach beabsichtigen Anwendung, insbesondere bei Abhängigkeit von der Größe der Fläche der zu produzierenden Anzeige. Die Dicke der Glasfolie bewegt sich zwischen 10 µm und 500 µm. Entweder werden die Glasfolie und das Kunststoffsubstrat miteinander verklebt oder das Harz wird auf das Glas aufgegossen. Beim Verkleben ergeben sich die schon genannten Probleme, die die optischen Eigenschaften und die Oberflächengüte des Endproduktes negativ beeinflussen können. Des weiteren haben Substratdicken >100 µm den Nachteil, daß die Glas-Kunstsoffverbundfolien nur begrenzt flexibel sind.

Bei allen bisher vorgestellten Endprodukten ist durch das Endprodukt selbst schon vorgegeben, welche Seite weiterprozessiert wird und wie sie weiterprozessiert werden kann. In der JP-A 4-235527 wird zum ersten Mal versucht, dem abzuhelfen, indem auf beide Seiten des Kunststoffsubstrates eine Glasfolie angebracht wird. Dazu werden allerdings mindestens ein Prozeßschritt, beim Verkleben sogar mindestens zwei weitere Prozeßschritte, sowie mehr Material benötigt. Es ist also bedeutend aufwendiger, ein Endprodukt herzustellen, dessen beide Seiten weiterprozessiert werden können.

Aus der EP 0 838 723 A ist ein Material, das eine Schicht auf einem Glasträger aufweist, bekannt geworden. Dieses Material eignet sich für Lithographiedrucke und für Flüssigkristallanzeigen. Das Material umfaßt einen Glasträger, der dünner als 1,2 mm ist und gegenüber Zugspannungen bis über 5 x 10⁷ Pa beständig ist. Außerdem sind die Kanten in Längsrichtung halbkreisförmig mit einem Radius von ungefähr 0,5 mal die Dicke des Trägers ausgebildet.

Die EP 0 272 875 A beschreibt eine optische Speicherkarte und ein Verfahren zu ihrer Herstellung, wobei die Karte aus Kunststoff und Aluminium besteht.

Die EP 0 759 565 A beschreibt ein Verfahren zur Herstellung eines Farbfilter-Array-Elementes. Dazu wird auf einen dünnen Träger, der in der Horizontalen steif ist, ein farbiges Muster von Pixelzellen aufgebracht. Danach wird entweder auf die Seite des Trägers oder die Seite der Pixelzellen ein transparenter Träger laminiert, wobei zunächst eine dünne Glasscheibe (127 µm) mit Polycarbonat durch Spincoaten beschichtet wird.

Nach Herstellung der Pixelzellen wird eine Borosilikatglasplatte unter Druck auf die Pixelzellen auflaminiert.

Aus der EP 0 669 205 A ist eine transparente Glaskunststoffverbundscheibe bekannt geworden, die aus mindestens einer transparenten Kunststoffscheibe, mindestens einer Glasscheibe und einer haftvermittelnden Zwischenschicht besteht. Bei der Glasscheibe handelt es sich um eine Glasfolie mit einer Schichtdicke von 30 bis 1000 µm. Die Kunststoffscheibe ist einige Millimeter dick, da die Verbundscheibe als leichte, kratzfeste Verglasung in Fahrzeugen eingesetzt werden soll.

Eine Glas-Kunststoff-Verbundfolie umfassend eine Glasfolie mit einer Dicke von 4 bis 200 µm, die auf einer oder beiden Oberflächen mit Kunststoff einer Dicke von 2 bis 200 µm beschichtet ist, ist aus der GB 131 98 46 bekannt geworden. Die Herstellung erfolgt entweder mit einem Klebstoff oder einem Haftvermittler. Alternativ kann der Kunststoff aber auch direkt aus der flüssigen Phase aufgebracht werden. Zu den verwendeten Kunststoffen gehören Polyolefine, PVC, PA, Polyvinylidenchlorid, Zellulose, Zelluloseacetate, Polystyrol oder auch Polymermischungen oder Copolymere dieser Polymere. Besonders bevorzugt wurden Polyester bzw. Polyethylenterephtalat. Die aus der GB 131 98 46 bekannte Glas-Kunststoff-Verbundfolie soll bevorzugt als Filmmaterial für Zeichnungen oder als gasund vakuum-impermeables Verpackungsmaterial verwendet werden. Demgemäß spielen die optischen Eigenschaften, die bei einer Anwendung im Bereich elektronischer Bauteile wichtig sind, bei der GB 131 98 46 keine Rolle und sind in dieser Schrift auch nicht erwähnt.

Die nachveröffentlichten Anmeldungen WO 99/21707 und WO 99/21708 beschreiben Laminate aus einem Glassubstrat und mindestens einem Träger, der aus durchsichtigem Kunststoff bestehen kann. Die Glasschicht hat eine Dicke von 10 bis 450 µm und die Kunststoffschicht eine Dicke >500 µm. Die Kunststoffschicht kann auch ohne Klebstoff durch Vakuumlaminierung auf das Glas aufgebracht werden. Vorgeschlagen wird dabei auch ein kontinuierliches Aufwalzen. Falls Klebstoff doch verwendet wird, sollte er bis 200°C thermisch stabil sein. Insbesondere bei der Vakuumlaminierung sei es wichtig, daß sowohl Kunststoff als auch Glas eine geringe Oberflächenrauhigkeit aufweisen. Dies wird aber nicht weiter quantifiziert. Als Klebschicht werden Silikone, Acrylate und auch mit UV-Licht vernetzbare Polymere vorgeschlagen. Auf das Glas kann auch ein Haftvermittler wie z.B. Epoxysilan aufgebracht werden, wenn auf dem Glas eine funktionale Schicht aufgebracht werden soll. Das gesamte Laminat kann gegebenenfalls mit einem Sol-Gel beschichtet werden. Da das Laminat insbesondere für Displays verwendet werden soll, sollten Kunststoff und Glas derart ausgewählt werden, daß sie einen möglichst ähnlichen Brechungsindex aufweisen.

Die WO 99/21708 beschreibt ein Verfahren zur Herstellung von Halbleitergeräten, in dem auf ein Substrat eine funktionale Schicht aufgebracht wird, wobei es sich bei dem Substrat um ein Laminat handelt, das aus einem Träger und einer Glasschicht einer Dicke von weniger als 700 µm besteht. Im wesentlichen handelt es sich um ein Laminat, wie es in der WO 99/21707 beschrieben wurde.

Aus der nachveröffentlichten GB 233 58 84 ist eine Komponente zur Verwendung als Schutzelement bei optoelektronischen oder elektronischen Bauteilen bekannt geworden, umfassend mindestens eine elektrisch aktive organische Schicht, wobei die Komponente eine Glasschicht mit einer Dicke <200 µm und eine Kunststoffschicht umfaßt, wobei die Kunststoffschicht eine Dicke <1 mm aufweist, bevorzugt um 200 µm. Nachteilig bei der GB 233 58 84 ist die Verarbeitung der aktiven organischen Funktionsschicht, die ein kompliziertes Verfahren erfordert.

Aufgabe der vorliegenden Erfindung ist es, eine Folie bereitzustellen, die möglichst breit einsetzbar ist, insbesondere in der Displayherstellung als Grundlage für die Herstellung aller Komponenten, wie z.B. der Flüssigkristallzelle, der Zelle zur Aufnahme der lichtemittierenden Schicht in OLEDs oder auch der Elektrodenschicht. Dabei sollte sie nicht nur heutigen, sondern auch zukünftigen Ansprüchen an die Foliengüte genügen und die vorteilhaften Eigenschaften sowohl von Glas als auch von Kunststoff aufweisen. Das Herstellungsverfahren sollte dabei mit möglichst wenigen Schritten auskommen und möglichst unaufwendig sein.

Diese Aufgabe wird gelöst durch eine Glas-Kunststoff-Verbundfolie, die sich dadurch auszeichnet, daß bei einer oberbegrifflichen Glas-Kunststoff-Verbundfolie, die Polymerschicht unmittelbar auf mindestens eine Seitenfläche aufgebracht wird, um insbesondere die Nachteile des Laminierens zu vermeiden und eine Seitenfläche an ihrer Oberfläche eine Welligkeit (auch Waviness) geringer als 100 nm und/oder eine Rauhigkeit R_{T} <30 nm aufweist. Besonders bevorzugt ist es, wenn auch der Streak geringer als 100 nm ist. Für die Verwendung im Bereich der elektronischen Bauteile und Geräte ist es von besonderem Vorteil die optische Retardation nicht mehr als 20 nm beträgt. Ein besonders flexibler Verbund ergibt sich, wenn die Dicke der aufgebrachten Polymerschicht im Bereich zwischen 1 µm und 100 µm liegt.

Außerdem wird diese Aufgabe gelöst durch die beiden folgenden Verfahren:

Das erste Verfahren umfaßt die Schritte Herstellen einer Glasfolie einer Dicke von 10 bis 500 µm im Down-draw-Prozeß mit einer Ziehgeschwindigkeit von 2 bis 12 m/min, Vorbehandeln der Glasfolienoberfläche, direktes Aufbringen einer 1 bis 200 µm dicken Polymerschicht in der flüssigen Phase und Vereinzeln der polymerbeschichteten Glasfolie.

Das zweite Verfahren umfaßt dieselben Schritte, wobei die Glasfolie schon nach dem Herstellen und vor dem Vorbehandeln ihrer Oberfläche und dem Aufbringen des Kunststoffes vereinzelt wird.

Durch die Verfahren ist es im Gegensatz zu den bereits bekannten Laminierverfahren möglich, sehr dünne und homogene Polymerfilme auf der Glasfolie zu erzeugen.

Die erfindungsgemäße Glas-Kunststoff-Verbundfolie ist im Falle der Displayherstellung wegen ihrer hohen Oberflächengüte sowohl für die Weiterprozessierung zu einer Polarisatorfolie als auch zu einer Trägerplatte für Elektroden als auch die Verwendung als äußerste Schutzscheibe geeignet. Durch die Kunststoffschicht ist die Folie bruchfest und zugleich leichter, durch die Glasfolienschicht ist sie kratzfest, hart, mechanisch stabil und chemisch inert. Je nachdem, ob die Glasseite oder die Kunststoffseite weiter bearbeitet wird, dient entweder die Kunststoffseite als Bruchschutz oder die Glasseite als Kratzschutz. Durch die geringe Doppelbrechung eignet sich die erfindungsgemäße Glas-Kunststoff-Verbundfolie besonders für die Verwendung in optoelektronischen Bauteilen und Geräten. Die hohe Oberflächengüte der Verbundfolie ist besonders für die Herstellung von Flüssigkristallzellen und Leuchtanzeigen auf der Basis lichtemittierender Schichten von Bedeutung. Rauhe Oberflächen können nämlich zu Fehlstellen in der Anzeige führen, da rauhe Oberflächen leicht zu einer uneinheitlichen Ausrichtung der Flüssigkristalle in den aufgebrachten Orientierungsschichten führen können. Welligkeiten führen zu Schichtdickenschwankungen in der aktiven Schicht (z.B. Flüssigkristall) und damit zu einer inhomogenen Displayanzeige.

Die Rauhigkeit R_{T}, auch Rauhtiefe genannt, wird nach DIN 4762 Teil 1-08.60. bestimmt und entspricht dem maximalen Abstand zwischen Profilkuppe und Profiltal innerhalb einer Bezugsstrecke. Sie ist nicht zu verwechseln mit der Rauhigkeit R_{A}, die dem arithmetischen Mittel aller Abstände entspricht und in der Regel nur einen Bruchteil von R_{T} beträgt. Die Rauhigkeit beschreibt den kurzwelligen Anteil der Abweichung von einer ideal ebenen Oberfläche. Die Welligkeit bzw. Waviness (gemessen nach DIN/ISO 11562 mit einem cut-off von 0,8 bis 8,0 mm und 2CRPC 50-Filter) beschreibt den mittleren Wellenlängenanteil der Abweichung von einer ideal ebenen Oberfläche. Die Welligkeit wird über eine Meßstreckte von 20 mm ermittelt. Der Streak wird mit denselben Geräteparametern wie die Welligkeit gemessen, die Auswertemeßstrecke beträgt 2mm.

In einer besonders bevorzugten Ausführungsform weisen beide Seiten der Glas-Kunststoff-Verbundfolie die hohe Oberflächengüte einer Welligkeit geringer als 100 nm und einer Rauhigkeit R_{T} geringer als 30 nm auf. Dadurch ist die Glas-Kunststoff-Verbundfolie noch vielseitiger einsetzbar, da sie auf beiden Seiten gleichermaßen weiterprozessierbar ist, bzw. auch die Möglichkeit eröffnet wird, sie beidseitig weiterzuprozessieren.

Um eine möglichst leichte, möglichst dünne und vor allem mit höchster Oberflächengüte ausgestattete Glas-Kunststoff-Verbundfolie zu erhalten, ist es unerläßlich, daß sie tatsächlich nur aus dem Polymer und der Glasfolie besteht und keinerlei Klebstoffschicht aufweist.

Gerade im Bereich der optoelektronischen Anwendungen ist die optische Retardation vorteilhafterweise ≤ 20 nm, bevorzugt ≤ 15 nm, um ein Verzerren der optischen Signale durch die Verbundfolie zu unterdrücken.

Im Hinblick auf das Verringern des Gewichtes und der Dicke von Displays sind die Glasfolienschichten bevorzugt 10 bis 400 µm, besonders bevorzugt 10 bis 200 µm und ganz besonders bevorzugt 10 bis 100 µm dick sowie die Polymerschicht bevorzugt 2 bis 100 µm, besonders bevorzugt 2 bis 50 µm dick und beträgt die optische Retardation nicht mehr als 15 nm.

Da ein großer Anteil des Glasbruches bei Glasfolien auf Mikrorisse, die an den Kanten ihren Ausgang nehmen, zurückzuführen sind, ist es vorteilhaft, daß mindestens eine Kante der Glas-Kunststoff-Verbundfolie gänzlich mit dem Kunststoff bedeckt ist. Dadurch wird sowohl das Entstehen neuer Risse als auch die Propagation bereits bestehender Risse verhindert.

Um die Glas-Kunststoff-Verbundfolie gegen punktuelle Belastung, wie z. B. Stöße mit spitzen Gegenständen unempfindlicher zu machen, hat es sich als vorteilhaft erwiesen, die Polymere für die Kunststoffschicht derart auszuwählen, daß ihr Elastizitätsmodul < 5.000 N/mm², bevorzugt < 2.600 N/mm², ganz besonders bevorzugt < 1.500 N/mm² ist. Die auftretende Spannungsbelastung wird durch die Polymerschicht auf eine größere Fläche verteilt und wesentlich verringert.

Das Elastizitätsmodul einer sehr dünnen Kunststoffschicht kann aus Krafteindringtiefenmessungen bestimmt werden. Dazu wird ein Prüfkörper definierter Geometrie, im allgemeinen ein pyramidal geschaffener Diamant, mit wachsender Last in die Oberfläche eingedrückt und anschließend wieder entlastet. Der Elastizitätsmodul ergibt sich dabei aus der Steigung der Entlastungsgeraden (Eindringtiefe in Abhängigkeit von der Last). Die Messungen werden mit einem sogenannten Pikoindentor durchgeführt, mit dem sehr kleine Eindrucktiefen zwischen 10 und 100 nm realisiert werden können. Dies ist notwendig, da, wenn die Eindringtiefe ca. 10 % der Schichtdicke überschreitet, das Substrat die Messung zu beeinflussen beginnt.

Als besonders vorteilhaft hat sich erwiesen, ein Polymer für die Kunststoffschicht derart auszuwählen, daß die Transmission der Glas-Kunststoff-Verbundfolie mehr als 90 % der unbeschichteten Glasfolie beträgt und die Trübung durch die Polymerbeschichtung um weniger als 1 % verglichen mit der unbeschichteten Glasfolie zunimmt.

Um möglichst viele Möglichkeiten zur Weiterprozessierung der Glas-Kunststoff-Verbundfolie zu haben sowie eine hohe Lebensdauer der auf Basis der Glas-Kunststoff-Verbundfolie hergestellten Produkte zu gewährleisten, ist die Glas-Kunststoff-Verbundfolie vorteilhafterweise bis zu 130°C dauertemperaturbeständig (über mehrere Stunden), und bis zu 140°C, bevorzugt 180°C, besonders bevorzugt 200°C, kurzzeittemperaturbeständig (einige Minuten).

Als besonders vorteilhaft für die Herstellung von LCD- und OLED-Displays haben sich Glas-Kunststoff-Verbundfolien herausgestellt, die auf ihren Oberflächen eine Rauhigkeit R_{T} < 10 nm, besonders bevorzugt < 3 nm und eine Welligkeit < 80 nm aufweisen.

Bevorzugte Materialien, um optimale Glas-Kunststoff-Verbundfolien zu erhalten, sind Siliconpolymer, Sol-Gel-Polymer (z. B. Ormocere ®, Nanocomposite), Polycarbonat, Polyethersulfon, Polyacrylat, Polyimid, Cycloolefincopolymer oder Polyarylat für die Kunststoffschicht und Borosilikatglas, Aluminosilikatglas, Aluminoborosilikatglas, bevorzugt alkalifreies Borosilikat für die Glasschicht.

Um eine Glas-Kunststoff-Verbundfolie herzustellen, muß erst die Glasfolie selbst hergestellt werden. Um eine Glasfolie der benötigten Oberflächengüte herzustellen, sollte dies im Down-draw-Prozeß geschehen mit Ziehgeschwindigkeiten zwischen 2 und 12 m/min. Die Oberflächengüte der Glasfolie ist Voraussetzung für das Erreichen einer entsprechenden Oberflächengüte auf der Kunststoffseite der Glas-Kunststoff-Verbundfolie. Nach dem Herstellen der Glasfolie kann diese entweder direkt weiterbehandelt werden oder, falls die Schritte des Vorbehandelns der Glasfolienoberfläche und des Aufbringens der Polymerschicht räumlich von der Glasfolienherstellung getrennt sind, erst vereinzelt werden, was bei der Herstellung kleinerer und mittlerer Mengen zu bevorzugen ist. Das Vorbehandeln der Glasfolienoberfläche geschieht, um ein gutes Haften der Polymerschicht zu gewährleisten.

Durch das direkte Aufbringen eines Polymers auf die Glasfolienoberfläche ohne Klebstoff, und zwar in der flüssigen Phase, wird erreicht, daß die Oberfläche der Polymerschicht sozusagen die Oberfläche der Giasfolie abbildet und deren exzellente Oberflächengüte aufweist. Sind das Herstellen der Glasfolie sowie das Vorbehandeln und Beschichten als kontinuierlicher Prozeß geplant, wird die polymerbeschichtete Glasfolie nun vereinzelt.

Durch das Aufbringen in der flüssigen Phase auf die starre Glasfolie ist außerdem gewährleistet, daß sich in dem Polymerfilm keine Verzugsrichtung ausbildet und somit die optische Retardation des Polymerfilms und damit der Verbundfolie weniger als 20 nm beträgt.

Ist die Glasfolie vor dem Beschichten vereinzelt worden und möchte man extrem dünne Polymerschichten erreichen, geschieht das Beschichten vorzugsweise durch Schleudern oder Sprühschleudern. Beschichtungsmethoden, die sich auch für einen kontinuierlichen Prozeß eignen, sind das Aufgießen, das Aufwalzen oder das Sprühen. Zum Aufbringen der Polymerschicht auf beide Seitenflächen der Glasfolie wird das Tauchen bevorzugt.

Zur Erhöhung der Bruchfestigkeit sollte mindestens auch eine Kante der Folie mitbeschichtet werden. Im kontinuierlichen Prozeß werden die Kanten parallel zur Ziehrichtung beschichtet, bei vereinzelten Folienstücken können alle vier Kanten beschichtet werden.

Vorteilhaft im Hinblick auf die Eigenschaften der herzustellenden Glas-Kunststoff-Verbundfolie sind die Verwendung von Glasfolien von 10 bis 400 µm, bevorzugt 10 bis 200 µm und besonders bevorzugt 10 bis 100 µm sowie das Aufbringen von Polymerschichten von 1 bis 200 µm, bevorzugt 2 bis 100 µm und besonders bevorzugt 10 bis 85 µm.

Um die Haftung der Polymerschicht auf der Glasfolie zu erhöhen, werden die besten Ergebnisse erzielt durch Oberflächenbehandlung durch UV-Bestrahlung der Glasfolienoberfläche in einer ozonhaltigen Atmosphäre, durch Corona-Behandlung oder auch durch Beflammen.

Zum Unterstützen des Aushärtens der Polymerschicht sollte die Folie mit ultraviolettem Licht bestrahlt werden und/oder unter Wärmeeinwirkung getrocknet werden.

Glas-Kunststoff-Verbundfolien mit besonders guten Eigenschaften erhält man, wenn als Polymer entweder Siliconpolymer oder Sol-Gel-Polymer oder Polycarbonat oder Polyethersulfon oder Polyacrylat oder Polyimid oder Cycloolefincopolymer oder ein Polyarylat verwendet werden. Weiterhin ist für dieses Verfahren vor allen Dingen die Verwendung von Borosilikatglas, vorzugsweise alkalifreies Borosilikatglas für die Glasfolienherstellung, vorteilhaft.

Geschützt werden soll außerdem die Verbindung der erfindungsgemäßen Glas-Kunststoff-Verbundfolie zur Herstellung elektronischer Bauteile und optoelektronischer Geräte, insbesondere auf der Basis von Flüssigkristallen oder lichtemittierenden Schichten.

Die Erfindung soll anhand der
- Fig. 1: Schnitt durch die Glas-Kunststoff-Verbundfolie an einer Kante und
- Fig. 2: Produktionsstraße zur Herstellung der Glas-Kunststoff-Verbundfolie sowie
anhand der darauf folgenden Beispiele erläutert werden.

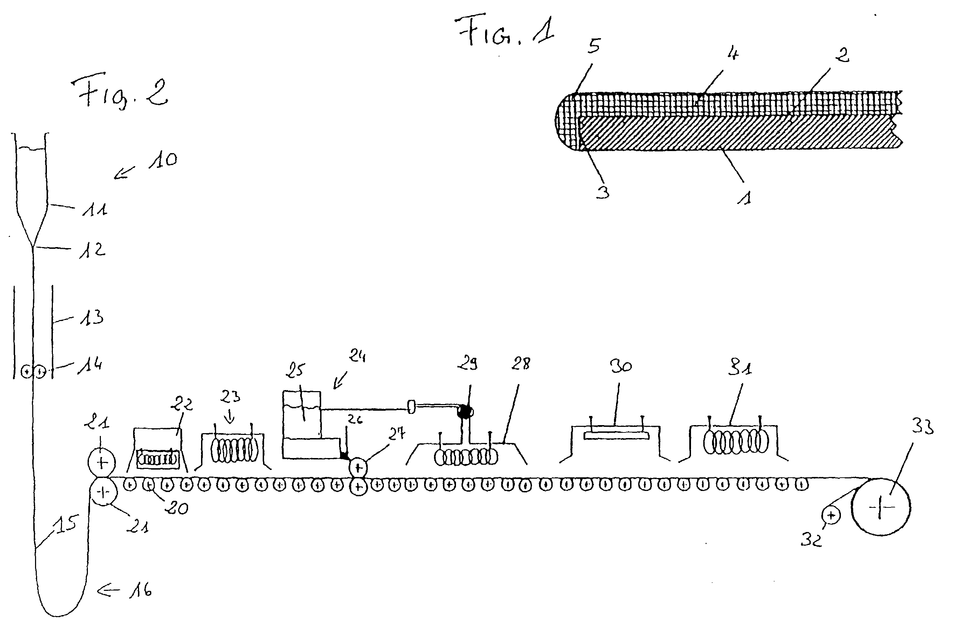

Fig. 1 zeigt einen Schnitt durch die Glas-Kunststoff-Verbundfolie an einer ihrer Kanten. Auf die Glasfolie 1 ist direkt auf die Glasfolienoberfläche 2 ein Polymerfilm 4 aufgebracht. Dieser Polymerfilm 4 erstreckt sich über die Glaskante 3 hinaus und bildet daher einen Randwulst 5, der die Glaskante 3 vollständig bedeckt. Auf diese Weise ist auch die Kante der Glas-Kunststoff-Verbundfolie vor Stößen geschätzt und wird eine Propagation von möglicherweise in der Kante existierenden Mikrorissen in der Kante verhindert.

Fig. 2 zeigt eine mögliche Produktionsstraße zur Herstellung der Glas-Kunststoff-Verbundfolie. Im Glaszug 10 wird im sogenannten modifizierten Down-draw-Verfahren die Glasfolie 15 hergestellt, indem in einem Heißformungsschritt die Glasfolie 15 vertikal aus dem Glastank 11 und der Ziehdüse 12 gezogen und auf der Kühlstrecke 13 gegebenenfalls nachgeformt wird. Durch die direkte Ankopplung der Beschichtungsstrecke erhält man eine minimale Kontamination und Oberflächenveränderung der Glasoberfläche vor der nachfolgenden Beschichtung, was besonders günstig für die Haftfähigkeit der Polymerschicht ist. Durch eine minimale Anzahl von Behandlungs-, Transport- und Zwischenlagerschritten wird außerdem die Erzeugung von Oberflächenverletzungen und Partikelkontamination auf ein Minimum reduziert. Um eine Anpassung der Prozeßgeschwindigkeiten und eventueller Toleranzen ausgleichen zu können, ist nach dem Glaszug 10 eine Pufferstrecke 16 in Form einer Schleife vorgesehen, wodurch man eine Entkopplung des Glaszieh- und des Beschichtungsprozesses erreicht. Durch das weitgebend freie Hängen der Glasfolie 15 wird eine unzulässige Verspannung der Glasfolie 15, die zu einem Abreissen führen kann, sowie eine Verunreinigung der Glasoberfläche verhindert.

Die Glasfolie 15 wird im weiteren Verlauf horizontal über Transportrollen 20 geführt und über Traktionsrollen 21 in ihrer Zugspannung geregelt, um eine gleichmäßige Transportgeschwindigkeit und Zugspannung zu gewährleisten und ein Abreissen der Glasfolie 15 zu verhindern. Die zu beschichtende Oberfläche wird in dem Oberflächenbehandlungsaggregat 22 durch UV-Bestrahlung in Ozonatmosphäre behandelt. Zur Einstellung der erforderlichen Glastemperatur vor dem Aufbringen des Polymers befindet sich vor dem Beschichtungsmodul 24 eine Temperiereinheit 23, die das Glasband auf eine genau definierte, homogene Temperatur vorheizt. Das Aufbringen der Beschichtung erfolgt durch das Beschichtungsmodul 24. Dabei fließt das Polymer 25 durch die Flachdüse 26 auf die Übertragerwalze 27 und wird durch diese auf die Glasfolie unter Anwendung von minimalem Druck (< 1 kg/cm²) aufgewalzt. In der ersten Trockenstrecke 28 wird das Lösungsmittel zum Verdunsten gebracht. Das verdunstete Lösungsmittel wird nach einer Aufbereitung bzw. Reinigung in den Prozeß zurückgeführt, um so die Umweltbelastung und den Verbrauch zu reduzieren. Eine erhöhte Temperatur der Glasfolie 15 bewirkt dabei ein schnelles Verdampfen des Lösungsmittels ohne die Bildung einer oberflächlichen Trockenhaut, die ein Verdampfen des im Volumen eingeschlossenen Lösungsmittels verhindern würde. Die Aushärtung und Trocknung der Polymerschicht geschieht in der UV-Belichtungsstrecke 30 und der zweiten Trocknungsstrecke 31. Am Ende der Strecke folgt eine Aufwickeleinheit 33 mit einem Zwischenlagenabroller 32, von dem eine Zwischenlage zwischen die Glas-Kunststoff-Verbundfolienlagen eingewickelt wird. Danach wird die Glas-Kunststoff-Verbundfolienrolle zur Vereinzelungsanlage gebracht.

### Ausführungsbeispiel 1

### Herstellung eines Glas/Polysilicon-Verbundes 100 µm/40 µm durch Walzlackierung

Verwendet wird eine Glasfolie aus Borosilikatglas des Glastypes D 263 (Firmenschrift der Fa. Schott-DESAG) mit einer Dicke von 100 µm, die mit dem Glasziehprozeß Down-draw hergestellt wird bei einer Ziehgeschwindigkeit des Glasbandes von 5,5 m/min. Die Oberfläche des Glassubstrates hat eine Welligkeit von 60 nm, einen Streak von 45 nm und eine Rauhigkeit R_{T} von 9 nm. Die Oberfläche des Glasbandes wird mit einer Corona-Behandlung aktiviert. Die Multimesser Metallelektrode hat eine Breite von 500 mm und der Abstand von der Elektrode zur Glasoberfläche beträgt 2 mm. Die Frequenz beträgt 30-50 kHz (automatische Frequenzregelung) und die Leistung 150 W. Der mit einem Walzlackierverfahren aufgebrachte zweikomponentige Siliconpolymerfilm auf Basis von Polydimethylsiloxan (Produktname Elastosil der Fa. Wacker-Chemie GmbH, Mischungsverhältnis beider Siliconkomponenten 9: 1) hat eine Dicke von 40 µm. Der Walzendurchmesser beträgt 238 mm und die Walzenlänge 550 mm bei einem mittleren Anpreßdruck von 0,5 kg/cm². In einem nachfolgenden Temperprozeß wird das siliconbeschichtete Glasband bei 150°C, 10 min gehärtet und anschließend vereinzelt. Das Elastizitätsmodul der Siliconschicht beträgt 1100 N/cm² und die Oberfläche weist eine Welligkeit von 50 nm, einen Streak von 41 nm und eine Rauhigkeit von 20 nm auf. Durch die Walzlackierbeschichtung sind die parallel zur Walzrichtung liegenden Seitenkanten mit dem Siliconpolymer bedeckt. Die optische Retardation beträgt 15 nm.

### Ausführungsbeispiel 2

### Herstellung eines Glas/Polysilicon-Verbundes 50 µm/2 µm durch Schleuderverfahren

Verwendet wird eine Glasfolie aus einem alkalifreien Borosilikatglas AF 45 (Firmenschrift der Fa. Schott-DESAG) mit einer Foliendicke von 50 µm, Welligkeit von 80 nm, Streak von 52 nm und Rauhigkeit R_{T} 4 nm, die im Down-draw-Prozeß mit einer Ziehgeschwindigkeit von 10 m/min hergestellt wird. Die Foliengröße beträgt 300 x 200 mm². Das Glassubstrat wird durch einen Waschprozeß gereinigt und anschließend durch eine UV-Ozonbehandlung (AmalgamNiederdruckstrahler, 500 W), bei 184,9 nm zur Bildung von Ozon, bei 253,7 nm zur Bildung von Sauerstoffradikalen an der Oberfläche 5 min aktiviert. Mit einem Schleuderverfahren (Umdrehungen 2400 1/min) wird die Glasfolie mit einem einkomponentigen - Siliconelastomer (Produktname Elastosil) der Fa. Wacker-Chemie GmbH (in Hexan gelöst mit einem Masseverhältnis Polymer/Hexan von 1:21) beschichtet und anschließend bei 120°C 15 min in einem Umluftofen getrocknet. Die Schichtdicke beträgt 2 µm. Durch die Schleuderbeschichtung sind alle 4 Seitenkanten mit dem Siliconpolymer bedeckt. Das Elastizitätsmodul der Siliconschicht beträgt 500 N/mm² und die Oberfläche weist eine Welligkeit von 67 nm, einen Streak von 43 nm und eine Rauhigkeit R_{T} von 9 nm auf. Die optische Retardation beträgt 5 nm.

### Ausführungsbeispiel 3

### D 263 Glas/Polycarbonat-Verbund 145 µm/3 µm mit Schleuderverfahren

Verwendet wird eine Glasfolie des Glastypes D 263 (Firmenschrift der Fa. Schott-DESAG) als Glassubstrat mit einer Dicke von 145 µm, das mit dem Down-draw-Prozeß mit einer Ziehgeschwindigkeit von 4,2 m/min hergestellt wird, wobei die Welligkeit 28 nm, der Streak 12 nm, die Rauhigkeit R_{T} 8 nm beträgt. Das Glassubstrat wird durch einen Waschprozeß gereinigt und anschließend durch eine UV-Ozonbehandlung (AmalgamNiederdruckstrahler, 1000 W), bei 184,9 nm zur Bildung von Ozon, bei 253,7 nm zur Bildung von Sauerstoffradikalen an der Oberfläche 5 min aktiviert. Mit einem Schleuderverfahren (Umdrehungen 1400 1/min) wird die Glasfolie mit einem Polycarbonatfilm (Pblycarbonat/Methylenchloridlösung, Masseverhältnis 1: 19) beschichtet und anschließend bei 80°C 20 min in einem Umluftofen getrocknet. Die Schichtdicke beträgt 3 µm. Durch die Schleuderbeschichtung sind alle 4 Seitenkanten mit dem Polycarbonatfilm bedeckt. Das Elastizitätsmodul der Polycarbonatschicht beträgt 1350 N/mm² und die Oberfläche weist eine Welligkeit von 30 nm, einen Streak von 16 nm und eine Rauhigkeit R_{T} von 9 nm auf. Die optische Retardation beträgt 9 nm.

### Ausführungsbeispiel 4

### AF 45 Glas/Polyethersulfon (PES) 200 µm/85 µm durch Extrudierverfahren

Verwendet wird eine Glasfolie aus einem alkalifreien Borosilikat AF 45 (Firmenschrift der Fa. Schott-DESAG) mit einer Foliendicke von 200 µm. Die Oberfläche des Glassubstrates hat eine Welligkeit von 55 nm, einen Streak von 36 nm und eine Rauhigkeit (R_{T}) von 7 nm. Die Ziehgschwindigkeit des Glasbandes beträgt 2,8 m/min.

Die Oberfläche des Glasbandes wird mit einer Corona-Behandlung aktiviert. Die Stabelektrode hat eine Breite von 500 mm und der Abstand von der Elektrode zur Glasoberfläche beträgt 4,5 mm. Die Frequenz beträgt 30-50 kHz (automatische Frequenzregelung) und die Leistung 250 W. Der mit einem Extrudierverfahren mit einer Ziehgeschwindigkeit von 2,8 m/min bei 380°C aufgebrachte PES-Film hat eine Dicke von 85 µm. Der Glas-PES-Verbund wird nach 5minütiger Abkühlzeit vereinzelt. Das Elastizitätsmodul der PES-Schicht beträgt 3200 N/mm² und die Oberfläche weist eine Welligkeit von 68 nm, einen Streak von 49 nm und eine Rauhigkeit R_{T} von 15 nm auf. Durch die Extrudierbeschichtung sind die parallel zur Ziehrichtung liegenden Seitenkanten mit dem PES-Polymer bedeckt. Die optische Retardation beträgt 18 nm.

### Ausführungsbeispiel 5

### AF 45 Glas/Polyacrylat-Verbund 50 µm/10 µm durch Sprühbeschichtung

Verwendet wird eine Glasfolie aus einem alkalifreien Borosilikatglas AF 45 (Firmenschrift der Fa. Schott-DESAG) mit einer Foliendicke von 50 µm, Welligkeit 80 nm, Streak 56 nm und Rauhigkeit R_{T} 4 nm, die im Down-draw-Prozeß mit einer Ziehgeschwindigkeit von 10 m/min hergestellt wird. Die Foliengröße beträgt 300 x 200 mm². Das Glassubstrat wird durch einen Waschprozeß gereinigt und anschließend durch eine UV-Ozonbehandlung (AmalgamNiederdruckstrahler 500 W) bei 184,9 nm zur Bildung von Ozon, bei 253,7 nm zur Bildung von Sauerstoffradikalen an der Oberfläche 5 min aktiviert. Die 10 µm dicke Polyacrylatschicht wird mit einem Sprühverfahren von einem Acrylat-Aerosol erzeugt, wobei alle 4 Seitenkanten mit dem Polymer bedeckt sind. Als Sprühverfahren wird das High Pressure Low Volumen (HPLV) Verfahren eingesetzt. Die auf 40°C vorgewärmte 10 %ige Polyacrylatlösung in N,N-Dimethylormamid wird über eine Sprühdüse mit einem Durchmesser von 0,6 mm versprüht, wobei der Zerstäuberdruck bei 0,55 bar und der Zuführdruck der Düse bei 4 bar liegt. Das Elastizitätsmodul der Acrylatschicht beträgt 5000 N/mm² und die Oberfläche weist eine Welligkeit von 75 nm, einen Streak 48 nm und eine Rauhigkeit R_{T} von 10 nm auf. Die optische Retardation beträgt 8 nm.

### Ausführungsbeispiel 6

### D 263 Glas/Cyclo-olefin-CoPolymer (COC) 145 µm/15 µm durch Extrudieren

Verwendet wird eine Glasfolie des Glastypes D 263 (Firmenschrift der Fa. Schott-DESAG) als Glassubstrat mit einer Dicke von 145 µm, das mit dem Down-draw-Prozeß hergestellt wird, wobei die Welligkeit 28 nm, der Streak 16 nm, die Rauhigkeit R_{T} 8 nm beträgt. Die Oberfläche des Glasbandes wird mit einer Corona-Behandlung aktiviert. Drei hintereinander angeordnete Multimesser Metallelektroden mit einer Breite von jeweils 500 mm mit einem Abstand von 7 mm zur Glasoberfläche werden eingesetzt. Die Frequenz beträgt 30-50 kHz (automatische Frequenzvariation) und die Leistung je Metallelektrode 120 W. Die Ziehgeschwindigkeit der Glasfolie beträgt 4,2 m/min. Der 15 µm dicke COC-Film wird mit einem Extrudierverfahren mit 4,2 m/min bei 270°C aufgebracht, wobei die Glaskanten parallel zur Ziehrichtung mit dem Polymer bedeckt sind. Nach einer Abkühlzeit von 7 min wird das beschichtete Glasband vereinzelt. Die Oberfläche weist eine Welligkeit von 26 nm, einen Streak von 14 nm und eine Rauhigkeit R_{T} von 15 nm auf, das Elastizitätsmodul beträgt 2800 N/mm². Die optische Retardation beträgt 10 nm.

### Ausführungsbeispiel 7

### D 263 Glas/Polyacrylat-Verbund 145 µm/3,5 µm durch Tauchverfahren

Verwendet wird eine Glasfolie des Glastypes D 263 (Firmenschrift der Fa. Schott-DESAG) als Glassubstrat mit einer Dicke von 145 µm, das mit dem Down-draw-Verfahren hergestellt wird, wobei die Welligkeit 28 nm, der Streak 16 nm, die Rauhigkeit R_{T} 8 nm beträgt. Die Glassubstratgröße beträgt 200 x 200 mm2. Das Glassubstrat wird durch einen Waschprozeß gereinigt und anschließend durch eine UV-Ozonbehandlung (AmalgamNiederdruckstrahler, 1000 W) bei 184,9 nm zur Bildung von Ozon, bei 253,7 nm zur Bildung von Sauerstoffradikalen an der Oberfläche 5 min aktiviert. Das Polyarylat wird im Ofen bei 130°C vorgetrocknet und es wird natriumgetrocknetes Toluol als Lösungsmittel verwendet. Der 35 µm dicke Polyarylatfilm wird mit einem Tauchverfahren (Polyarylat/Toluol, Masseverhältnis 1:18, Prozeßtemperatur 80°C) unter Stickstoffatmosphäre aufgebracht, mit nachfolgendem Temperprozeß von 160°C 10 min getrocknet. Alle 4 Seitenkanten sind mit dem 3,5 µm dicken Polyarylatfilm bedeckt. Das Elastizitätsmodul beträgt 2400 N/mm² und die Oberfläche weist eine Welligkeit von 19 nm, einen Streak von 11 nm und eine Rauhigkeit R_{T} von 10 nm auf. Die optische Retardation beträgt 8 nm.

### Ausführungsbeispiel 8

### D 263 Glas / Siliconharz-Verbund 100 µm/4,5 µm durch Schleuderverfahren

Verwendet wird eine Glasfolie des Glastyps D 263 (Firmenschrift der Fa. Schott-Desag) als Glassubstrat mit einer Dicke von 100 µm, das mit dem Down-draw-Verfahren hergestellt wird, wobei die Welligkeit 33 nm, der Streak 15 nm und die Rauhigkeit R_{T} 6 nm beträgt. Die Glassubstratgröße beträgt 100 x 100 mm². Das Glassubstrat wird durch einen Waschprozeß gereinigt und anschließend durch eine UV-Ozon-Behandlung (Amalgam Niederdruckstrahler, 1000 W) bei 184,9 nm zur Bildung von Ozon, bei 253,7 nm zur Bildung von Sauerstoffradikalen an der Oberfläche 5 min aktiviert. Mit einem Schleuderverfahren (Umdrehungen 5000 1/min) wird die Glasfolie mit einem Methylphenylsiliconharz (Produktname Silres® der Fa. Wacker-Chemie GmbH, Siliconharz/Xylollösung mit Masseverhältnis 1:3) beschichtet und anschließend bei 220°C 15 min in einem Umluftofen getrocknet. Die Schichtdicke beträgt 4,5 µm. Durch die Schleuderbeschichtung sind alle 4 Seitenkanten mit dem Siliconharz bedeckt. Die Oberfläche weist eine Welligkeit von 35 nm, ein Streak von 17 nm und eine Rauhigkeit R_{T} von 9 nm auf. Die optische Retardation beträgt 14 nm.

### Bezugszeichenliste

- 1: Glasfolie
- 2: Glasfolienoberfläche
- 3: Glaskante
- 4: Polymerfilm
- 5: Randwulst
- 10: Glaszug
- 11: Glastank
- 12: Ziehdüse
- 13: Kühlstrecke
- 14: Walzen
- 15: Glasfolie
- 16: Pufferstrecke
- 20: Transportrollen
- 21: Walzen
- 22: Oberflächenbehandlungsaggregat
- 23: Temperiereinheit
- 24: Beschichtungsmodul
- 25: Polymer
- 26: Flachdüse
- 27: Übertragerwalze
- 28: erste Trockenstrecke
- 29: Absaugung
- 30: UV-Belichtungsstrecke
- 31: zweite Trockenstrecke
- 32: Zwischenlagenabroller
- 33: Aufwickeleinheit

## Patentansprüche

1. Glas-Kunststoff-Verbundfolie, insbesondere zur Verwendung in elektronischen Bauteilen und Geräten, beispielsweise Displays, aus einer Glasfolie, die eine Dicke zwischen 10 µm und 500 µm aufweist, **dadurch gekennzeichnet, daß**
unmittelbar auf mindestens einer ihrer Seitenflächen eine Polymerschicht, die eine Dicke zwischen 1 µm und 200 µm aufweist, aufgebracht wird und mindestens eine Seite an ihrer Oberfläche eine Welligkeit geringer als 100 nm und eine Rauhigkeit R_{T} < 30 nm aufweist.

2. Glas-Kunststoff-Verbundfolie nach Anspruch 1, **dadurch gekennzeichnet, daß**
die optische Retardation nicht mehr als 20 nm beträgt.

3. Glas-Kunststoff-Verbundfolie nach einem der Ansprüche 1 bis 2, **dadurch gekennzeichnet, daß**
der Streak geringer als 100 nm, bevorzugt ≤ 50 nm, besonders bevorzugt ≤ 30 nm, ist.

4. Glas-Kunststoff-Verbundfolie nach einem der Ansprüche 1 bis 3, **dadurch gekennzeichnet, daß**
beide Seiten an ihrer Oberfläche eine Welligkeit geringer 100 nm und eine Rauhigkeit R_{T} geringer als 30 nm aufweisen.

5. Glas-Kunststoff-Verbundfolie nach einem der Ansprüche 1 bis 4, **dadurch gekennzeichnet, daß**
die Glasdicke 10 bis 400 µm, bevorzugt 10 bis 200 µm, besonders bevorzugt 10 bis 100 µm beträgt.

6. Glas-Kunststoff-Verbundfolie nach einem der Ansprüche 1 bis 5, **dadurch gekennzeichnet, daß**
die Dicke der Polymerschicht 2 bis 100 µm, bevorzugt 2 bis 50 µm beträgt.

7. Glas-Kunststoff-Verbundfolie nach einem der Ansprüche 1 bis 6, **dadurch gekennzeichnet,**
**daß** die Folie auch auf mindestens einer Kante die Polymerschicht aufweist.

8. Glas-Kunststoff-Verbundfolie nach einem der Ansprüche 1 bis 7, **dadurch gekennzeichnet, daß**
die Polymerschicht ein Elastizitätsmodul < 5. 000 N/mm², bevorzugt < 2.600 N/mm², besonders bevorzugt < 1.500 N/mm² aufweist.

9. Glas-Kunststoff-Verbundfolie nach einem der Ansprüche 1 bis 8, **dadurch gekennzeichnet, daß**
die Transmission der Glas-Kunststoff-Verbundfolie mehr als 90 % der unbeschichteten Glasfolie beträgt und die Trübung durch die Polymerbeschichtung um weniger als 1 % zunimmt.

10. Glas-Kunststoff-Verbundfolie nach einem der Ansprüche 1 bis 9, **dadurch gekennzeichnet, daß**
die Rauhigkeit der Oberfläche R_{T} ≤20 nm, bevorzugt ≤10 nm ist, die Welligkeit der Oberfläche ≤8 nm, bevorzugt ≤50 nm, besonders bevorzugt ≤ 30 nm ist und die optische Retardation nicht mehr als 15 nm beträgt.

11. Glas-Kunststoff-Verbundfolie nach einem der Ansprüche 1 bis 10, **dadurch gekennzeichnet, daß**
im Dauergebrauch die Folie bis 130°C temperaturbeständig ist, bei kurzzeitiger Erwärmung die Folie bis 140°C, bevorzugt 180°C, besonders bevorzugt 200°C, temperaturbeständig ist.

12. Glas-Kunststoff-Verbundfolie nach einem der Ansprüche 1 bis 11, **dadurch gekennzeichnet, daß**
die Polymerschicht aus einem Siliconpolymer, einem Sol-Gel-Polymer, einem Polycarbonat, einem Polyethersulfon, einem Polyacrylat, einem Polyimid, einem Cycloolefincopolymer, einem Polyarylat oder einem Siliconharz besteht.

13. Glas-Kunststoff-Verbundfolie nach einem der Ansprüche 1 bis 12, **dadurch gekennzeichnet, daß**
die Glasfolie aus einem Aluminosilikatglas, Aluminoborosilikatglas, Borosilikatglas, bevorzugt einem alkalifreien Borosilikatglas, besteht.

14. Verfahren zur Herstellung einer Glas-Kunststoff-Verbundfolie nach einem der Ansprüche 1 bis 13 mit den Schritten:
- Herstellen einer Glasfolie einer Dicke von 10 bis 500 µm im Down-draw-Prozeß mit einer Ziehgeschwindigkeit von 2 bis 12 m/min;
- Vorbehandeln der Glasfolienoberfläche;
- direktes Aufbringen einer 1 bis 200 µm dicken Polymerschicht in der flüssigen Phase;
- Vereinzeln der polymerbeschichteten Glasfolie.

15. Verfahren zur Herstellung einer Glas-Kunststoff-Verbundfolie nach einem der Ansprüche 1 bis 13 mit den Schritten:
- Herstellen einer Glasfolie einer Dicke von 10 bis 500 µm im Down-draw-Prozeß mit einer Ziehgeschwindigkeit von 2 bis 12 m/min;
- Vereinzeln der Glasfolie;
- Vorbehandeln der Glasfolienoberfläche;
- direktes Aufbringen einer 1 bis 200 µm dicken Polymerschicht in der flüssigen Phase.

16. Verfahren nach Anspruch 15, **dadurch gekennzeichnet, daß** das Aufbringen der Polymerschicht durch Schleudern oder durch Sprühschleudern geschieht.

17. Verfahren nach Anspruch 14 oder 15, **dadurch gekennzeichnet, daß** das Aufbringen der Polymerschicht durch Aufgießen oder Aufwalzen oder Sprühen oder Tauchen geschieht.

18. Verfahren nach einem der Ansprüche 14 bis 17, **dadurch gekennzeichnet, daß**
zusätzlich zur Seitenfläche mindestens eine Kante beschichtet wird.

19. Verfahren nach einem der Ansprüche 14 bis 18, **dadurch gekennzeichnet, daß**
eine Glasfolie einer Dicke von 10 bis 400 µm, bevorzugt 10 bis 200 µm, besonders bevorzugt 10 bis 100 µm am Glaszug im Down-draw-Prozeß hergestellt wird.

20. Verfahren nach einem der Ansprüche 14 bis 19, **dadurch gekennzeichnet, daß**
das Beschichten zu einer Polymerschichtdicke von 2 bis 100 µm, bevorzugt 2 bis 50 µm führt.

21. Verfahren nach einem der Ansprüche 14 bis 20, **dadurch gekennzeichnet, daß**
die Oberflächenbehandlung vor dem Beschichten als UV-Bestrahlung in einer ozonhaltigen Atmosphäre oder als Corona-Behandlung oder als Beflammen durchgeführt wird.

22. Verfahren nach einem der Ansprüche 14 bis 21, **dadurch gekennzeichnet, daß**
nach dem Beschichten die Polymerbeschichtung mit Hilfe von UV-Strahlung ausgehärtet wird und/oder unter Wärmeeinwirkung getrocknet wird.

23. Verfahren nach einem der Ansprüche 14 bis 22, **dadurch gekennzeichnet, daß**
als Polymer ein Siliconpolymer, ein Sol-Gel-Polymer, ein Polycarbonat, ein Polyethersulfon, ein Polyacrylat, ein Polyimid, ein Cycloolefincopolymer, ein Polyarylat oder einem Siliconharz besteht.

24. Verfahren nach einem der Ansprüche 14 bis 23, **dadurch gekennzeichnet, daß**
für die Glasfolienherstellung die Glasfolie aus einem Aluminosilikatglas, Aluminoborosilikatglas, einem Borosilikatglas, vorzugsweise ein alkalifreies Borosilikatglas, verwendet wird.

25. Verwendung der Glas-Kunststoff-Verbundfolie nach einem der Ansprüche 1 bis 13 zur Herstellung elektronischer Bauteile und optoelektronischer Geräte, insbesondere auf Basis von Flüssigkristallen oder lichtemittierenden Schichten.

## Claims

1. Glass-plastic composite film, in particular for use in electronic components and devices, for example displays, made from a glass film, which has a thickness of between 10 µm and 500 µm, **characterized in that** a polymer layer, which has a thickness of between 1 µm and 200 µm, is applied directly to at least one of its side faces and at least one side has a waviness of less than 100 nm and a roughness R_{T} of < 30 nm at its surface.

2. Glass-plastic composite film according to Claim 1, **characterized in that** the optical retardation is no more than 20 nm.

3. Glass-plastic composite film according to either of Claims 1 and 2, **characterized in that** the streak is less than 100 nm, preferably ≤ 50 nm, particularly preferably ≤ 30 nm

4. Glass-plastic composite film according to one of Claims 1 to 3, **characterized in that** both sides have a waviness of less than 100 nm and a roughness R_{T} of less than 30 nm at their surface.

5. Glass-plastic composite film according to one of Claims 1 to 4, **characterized in that** the glass thickness is 10 to 400 µm, preferably 10 to 200 µm, particularly preferably 10 to 100 µm.

6. Glass-plastic composite film according to one of Claims 1 to 5, **characterized in that** the thickness of the polymer layer is 2 to 100 µm, preferably 2 to 50 µm.

7. Glass-plastic composite film according to one of Claims 1 to 6, **characterized in that** the film also has the polymer layer on at least one edge.

8. Glass-plastic composite film according to one of Claims 1 to 7, **characterized in that** the polymer layer has a modulus of elasticity of < 5000 N/mm² preferably < 2600 N/mm², particularly preferably < 1500 N/mm².

9. Glass-plastic composite film according to one of Claims 1 to 8, **characterized in that** the transmission of the glass-plastic composite film is more than 90% of the uncoated glass film, and the opacity increases by less than 1% as a result of the polymer coating.

10. Glass-plastic composite film according to one of Claims 1 to 9, **characterized in that** the roughness of the surface R_{T} is ≤ 20 nm, preferably ≤ 10 nm, the waviness of the surface is ≤ 80 nm, preferably ≤ 50 nm, particularly preferably ≤ 30 nm, and the optical retardation is no more than 15 nm.

11. Glass-plastic composite film according to one of Claims 1 to 10, **characterized in that** the film is thermally stable up to 130°C in long-term use and the film is thermally stable up to 140°C, preferably 180°, particularly preferably 200°C, in the event of short-term heating.

12. Glass-plastic composite film according to one of Claims 1 to 11, **characterized in that** the polymer layer consists of a silicone polymer, a sol-gel polymer, a polycarbonate, a polyether sulfone, a polyacrylate, a polyimide, a cycloolefin copolymer, a polyarylate or a silicone resin.

13. Glass-plastic composite film according to one of Claims 1 to 12, **characterized in that** the glass film consists of an aluminosilicate glass, aluminoborosilicate glass, borosilicate glass, preferably an alkali-free borosilicate glass.

14. Process for producing a glass-plastic composite film according to one of Claims 1 to 13, comprising the steps of:
- producing a glass film with a thickness of 10 to 500 µm using the down-draw process at a drawing rate of 2 to 12 m/min;
- pretreating the glass film surface;
- directly applying a 1 to 200 µm thick polymer layer in the liquid phase;
- dividing up the polymer-coated glass film.

15. Process for producing a glass-plastic composite film according to one of Claims 1 to 13, comprising the steps of:
- producing a glass film with a thickness of 10 to 500 µm using the down-draw process at a drawing rate of 2 to 12 m/min;
- dividing up the glass film;
- pretreating the glass film surface;
- directly applying a 1 to 200 µm thick polymer layer in the liquid phase.

16. Process according to Claim 15, **characterized in that** the polymer layer is applied by spin coating or by spray-spin coating.

17. Process according to Claim 14 or 15, **characterized in that** the polymer layer is applied by being poured or rolled on or by spraying or dipping.

18. Process according to one of Claims 14 to 17, **characterized in that** at least one edge is coated in addition to the side face.

19. Process according to one of Claims 14 to 18, **characterized in that** a glass film with a thickness of 10 to 400 µm, preferably 10 to 200 µm, particularly preferably 10 to 100 µm, is produced on the glass draw in the down-draw process.

20. Process according to one of Claims 14 to 19, **characterized in that** the coating leads to a polymer layer thickness of 2 to 100 µm, preferably 2 to 50 µm.

21. Process according to one of Claims 14 to 20, **characterized in that** the surface treatment prior to the coating is carried out as UV irradiation in an ozone-containing atmosphere or as a corona treatment or as a flame treatment.

22. Process according to one of Claims 14 to 21, **characterized in that** after the coating the polymer coating is cured with the aid of UV radiation and/or is dried under the action of heat.

23. Process according to one of Claims 14 to 22, **characterized in that** the polymer applied is a silicone polymer, a sol-gel polymer, a polycarbonate, a polyether sulfone, a polyacrylate, a polyimide, a cycloolefin co-polymer, a polyarylate or a silicone resin.

24. Process according to one of Claims 14 to 23, **characterized in that** the glass film consisting of an aluminosilicate glass, aluminoborosilicate glass, a borosilicate glass, preferably an alkali-free borosilicate glass, is used to produce the glass film.

25. Use of the glass-plastic composite film according to one of Claims 1 to 13 for the production of electronic components and optoelectronic devices, in particular based on liquid crystals or light-emitting layers.

## Revendications

1. Feuille composite de verre-plastique, en particulier pour utilisation dans des composants et appareils électroniques, par exemple des écrans, constituée d'une feuille de verre, qui présente une épaisseur entre 10 µm et 500 µm, **caractérisée en ce qu'**une couche de polymère, qui présente une épaisseur entre 1 µm et 200 µm, est directement appliquée sur au moins une de ses faces latérales et qu'au moins un côté présente à sa surface une ondulation de moins de 100 nm et une rugosité R_{T} < 30 nm.

2. Feuille composite de verre-plastique selon la revendication 1, **caractérisée en ce que** le décalage de phase optique n'excède pas 20 nm.

3. Feuille composite de verre-plastique selon l'une des revendications 1 à 2, **caractérisée en ce que** la traînée est inférieure à 100 nm, de préférence ≤ 50 nm, plus préférentiellement < 30 nm.

4. Feuille composite de verre-plastique selon l'une des revendications 1 à 3, **caractérisée en ce que** les deux côtés présentent à leur surface une ondulation de moins de 100 nm et une rugosité R_{T} de moins de 30 nm.

5. Feuille composite de verre-plastique selon l'une des revendications 1 à 4, **caractérisée en ce que** l'épaisseur du verre est de 10 à 400 µm, de préférence de 10 à 200 µm, plus préférentiellement de 10 à 100 µm.

6. Feuille composite de verre-plastique selon l'une des revendications 1 à 5, **caractérisée en ce que** l'épaisseur de la couche de polymère est de 2 à 100 µm, de préférence de 2 à 50 µm.

7. Feuille composite de verre-plastique selon l'une des revendications 1 à 6, **caractérisée en ce que** la feuille présente également la couche de polymère sur au moins une arête.

8. Feuille composite de verre-plastique selon l'une des revendications 1 à 7, **caractérisée en ce que** la couche de polymère présente un module d'élasticité < 5.000 N/mm², de préférence < 2.600 N/mm², plus préférentiellement < 1.500 N/mm².

9. Feuille composite de verre-plastique selon l'une des revendications 1 à 8, **caractérisée en ce que** la transmission de la feuille composite de verre-plastique est de plus de 90% de celle de la feuille de verre non revêtue et que le voile dû à la couche de polymère augmente de moins de 1%.

10. Feuille composite de verre-plastique selon l'une des revendications 1 à 9, **caractérisée en ce que** la rugosité de surface R_{T} est ≤ 20 nm, de préférence ≤ 10 nm, que l'ondulation de la surface est ≤ 80 nm, de préférence ≤ 50 nm, plus préférentiellement ≤ 30 nm, et que le décalage de phase optique n'excède pas 15 nm.

11. Feuille composite de verre-plastique selon l'une des revendications 1 à 10, **caractérisée en ce qu'**en usage continu la feuille résiste à une température jusqu'à 130°C, et pour un échauffement de courte durée la feuille résiste à une température jusqu'à 140°C, de préférence 180°C, plus préférentiellement 200°C.

12. Feuille composite de verre-plastique selon l'une des revendications 1 à 11, **caractérisée en ce que** la couche de polymère est constituée d'un polymère siliconé, un polymère sol-gel, un polycarbonate, un polyéthersulfone, un polyacrylate, un polyimide, un copolymère de cyclooléfines, un polyarylate ou une résine siliconée.

13. Feuille composite de verre-plastique selon l'une des revendications 1 à 12, **caractérisée en ce que** la feuille de verre est constituée d'un verre d'aluminosilicate, d'un verre d'aluminoborosilicate, d'un verre borosilicate, de préférence un verre borosilicate non alcalin.

14. Procédé de production d'une feuille composite de verre-plastique selon l'une des revendications 1 à 13, comportant les étapes suivantes:
- préparation d'une feuille de verre d'une épaisseur de 10 à 500 µm par le procédé d'étirage par le bas ("down-draw") avec une vitesse d'étirage de 2 à 12 m/min,
- prétraitement de la surface de la feuille de verre,
- application directe d'une couche de polymère d'une épaisseur de 1 à 200 µm en phase liquide,
- séparation de la feuille de verre revêtue de polymère.

15. Procédé de production d'une feuille composite de verre-plastique selon l'une des revendications 1 à 13, comportant les étapes suivantes:
- préparation d'une feuille de verre d'une épaisseur de 10 à 500 µm par le procédé d'étirage par le bas ("down-draw") avec une vitesse d'étirage de 2 à 12 m/min,
- séparation de la feuille de verre,
- prétraitement de la surface de la feuille de verre,
- application directe d'une couche de polymère d'une épaisseur de 1 à 200 µm en phase liquide.

16. Procédé selon la revendication 15, **caractérisé en ce que** l'application de la couche de polymère est opérée par centrifugation ou par pulvérisation par centrifugation.

17. Procédé selon la revendication 14 ou 15, **caractérisé en ce que** l'application de la couche de polymère est opérée par infusion ou laminage ou pulvérisation ou immersion.

18. Procédé selon l'une des revendications 14 à 17, **caractérisé en ce qu'**outre la face latérale, au moins une arête est revêtue.

19. Procédé selon l'une des revendications 14 à 18, **caractérisé en ce que** l'on prépare une feuille de verre d'une épaisseur de 10 à 400 µm, de préférence de 10 à 200 µm, plus préférentiellement de 10 à 100 µm sur le verre étiré par le procédé d'étirage par le bas ("down-draw").

20. Procédé selon l'une des revendications 14 à 19, **caractérisé en ce que** l'opération de revêtement fournit une épaisseur de couche de polymère de 2 à 100 µm, de préférence de 2 à 50 µm.

21. Procédé selon l'une des revendications 14 à 20, **caractérisé en ce que** le traitement de surface avant revêtement est réalisé par irradiation UV dans une atmosphère ozonisée ou traitement corona ou flammage.

22. Procédé selon l'une des revendications 14 à 21, **caractérisé en ce qu'**après le revêtement, la couche de polymère est durcie à l'aide de rayons UV et/ou séchée sous l'action de la chaleur.

23. Procédé selon l'une des revendications 14 à 22, **caractérisé en ce que** l'on applique, en tant que polymère, un polymère siliconé, un polymère sol-gel, un polycarbonate, un polyéthersulfone, un polyacrylate, un polyimide un copolymère de cyclooléfines, un polyarylate ou une résine siliconée.

24. Procédé selon l'une des revendications 14 à 23, **caractérisé en ce que** l'on utilise pour la préparation de la feuille de verre la feuille de verre constituée d'un verre d'aluminosilicate, un verre d'aluminoborosilicate, un verre borosilicate, de préférence un verre borosilicate non alcalin.

25. Utilisation de la feuille composite de verre-plastique selon l'une des revendications 1 à 13 dans la production de composants électroniques et d'appareils optoélectroniques, en particulier à base de cristaux liquides ou de couches électroluminescentes.
